# EUROPÄISCHE PATENTSCHRIFT

(11) **EP 2 786 048 B1**
(45) Veröffentlichungstag und Bekanntmachung des Hinweises auf die Patenterteilung: **29.06.2016**
(21) Anmeldenummer: 12786907.1
(22) Anmeldetag: 05.11.2012
(51) Int. Cl.: F16H 59/10, F16H 61/24

(54) **BETÄTIGUNGSVORRICHTUNG FÜR EIN GETRIEBE EINES KRAFTFAHRZEUGS**
ACTIVATION DEVICE FOR A TRANSMISSION OF A MOTOR VEHICLE
DISPOSITIF D'ACTIONNEMENT DE LA BOÎTE DE VITESSES D'UN VÉHICULE

(30) Priorität: 29.11.2011 DE 102011087330
(43) Veröffentlichungstag der Anmeldung: 08.10.2014
(73) Patentinhaber: Bayerische Motoren Werke Aktiengesellschaft, 80809 München (DE)
(72) Erfinder: LINDNER, Matthias, 82166 Gräfelfing (DE); TILLE, Thomas, 81249 München (DE)
(86) Internationale Anmeldenummer: PCT/EP2012/071782
(87) Internationale Veröffentlichungsnummer: WO 2013/079275

(56) Entgegenhaltungen:
- WO-A1-2011/090011
- DE-A1-102006 059 992
- DE-A1-102007 036 086
- DE-A1-102009 039 113

## Beschreibung

Die vorliegende Erfindung betrifft eine Betätigungsvorrichtung für ein Getriebe eines Kraftfahrzeugs nach dem Oberbegriff des Anspruchs 1.

Zur Betätigung von automatischen Fahrzeuggetrieben ist im Fahrzeuginnenraum von bekannten Fahrzeugen in der Regel eine Betätigungsvorrichtung mit einem Gangwahlschalter vorgesehen, den der Fahrer zum Anwählen verschiedener Fahrprogramme, einem Vorwärtsfahrprogramm, einer Rückwärtsfahrstufe und zur Auswahl einer Neutralstufe des Getriebes in einer Schaltgasse bewegen kann. Die Betätigung des Gangwahlschalters führt zu einem Steuerbefehl, der zu einer Getriebesteuervorrichtung übertragen wird. Zu den genannten Fahrprogrammen kommt zusätzlich eine Parksperrschaltung hinzu, die bei einigen Betätigungseinrichtungen ebenfalls mittels des Gangwahlschalters, und bei anderen Betätigungseinrichtungen mit einem eigens dafür vorgesehenen, beispielsweise am Gangwahlschalter oder benachbart dazu angeordneten Betätigungsknopf anwählbar ist. Wird die Parksperre betätigt, wird das Getriebe mechanisch verriegelt.

Aus der Druckschrift DE 10 2006 008 816 A1 ist eine Betätigungsvorrichtung für ein Getriebe eines Kraftfahrzeugs bekannt geworden, mit einem in einer Schaltgasse bewegbaren Gangwahlschalter zum Anwählen eines Vorwärtsfahrprogramms und einer Rückwärtsfahrstufe des Getriebes, wobei der Gangwahlschalter zur Einnahme einer ersten oder einer zweiten Ruheposition in der Schaltgasse ausgebildet ist. Aus der ersten Ruheposition ist der Gangwahlschalter zum Anwählen der Rückwärtsfahrstufe betätigbar. Aus der zweiten Ruheposition lässt sich der Gangwahlschalter zum Anwählen des Vorwärtsfahrprogramms in eine erste Einrastposition bringen, und zudem kann der Gangwahlschalter zum Anwählen eines weiteren Fahrprogramms, eines Sportfahrprogramms, über die erste Einrastposition hinaus in eine zweite Einrastposition gebracht werden. Der Gangwahlschalter lässt sich außerdem durch Betätigung aus der ersten Ruheposition in die zweite Ruheposition, und aus der zweiten Ruheposition in die erste Ruheposition bringen. Auf diese Weise ist innerhalb von einer einzigen Schaltgasse nebst der Rückwärtsfahrstufe und des Vorwärtsfahrprogramms ein weiteres Fahrprogramm anwählbar. Der Gangwahlschalter steht allerdings nicht immer an der ergonomisch günstigsten Position.

Aus der gattungsgemäßen Druckschrift DE 10 2009 039 113 A1 ist eine Betätigungsvorrichtung für ein Getriebe eines Kraftfahrzeugs bekannt geworden, mit einem in einer Schaltgasse bewegbaren Gangwahlschalter zum Anwählen eines Vorwärtsfahrprogramms und einer Rückwärtsfahrstufe des Getriebes, wobei der Gangwahlschalter zur Einnahme einer monostabilen Ruheposition in der Schaltgasse ausgebildet ist. Der Gangwahlschalter ist zudem zum Anwählen eines weiteren Fahrprogramms, nämlich eines Sportfahrprogramms ausgebildet. Wenn eine Neutralstufe eingelegt ist, und der Gangwahlschalter sich in der monostabilen Ruheposition befindet, lässt sich der Gangwahlschalter zum Anwählen des Vorwärtsfahrprogramms in eine erste Einrastposition bringen, und er lässt sich zum Anwählen des Sportfahrprogramms durch weiteres Verschwenken, nachdem die erste Einrastposition erreicht wurde, in eine zweite Einrastposition bringen. Auf diese Weise kann der Fahrer aus der Neutralstufe heraus die Rückwärtsfahrstufe, das Vorwärtsfahrprogramm und das Sportfahrprogramm direkt anwählen. Darüber hinaus springt der Gangwahlschalter stets in eine einzige monostabile Ruheposition zurück, so dass der Fahrer den Gangwahlschalter immer aus einer ergonomisch günstigen Position betätigen kann.
Anhand der US 2012/0291579 A1 ist eine Betätigungsvorrichtung für ein Getriebe eines Kraftfahrzeugs bekannt geworden, bei der ein Schalter 18 am Gangwahlschalter angeordnet ist. Der Schalter 18 dient zur Auswahl und zum Lösen eines Fahrbereichs L oder besitzt die Funktion, zu einem manuellen Fahrbereich zu schalten. Die Funktion des Schalters 18 entspricht dabei der unter Bezugnahme auf das erste und zweite modifizierte Ausführungsbeispiel beschriebenen Funktion.

Anhand der DE 10 2006 059992 A1 ist ein Schaltbedienungselement für ein Getriebe eines Fahrzeugs vorgesehen, bei der eine zweite Zusatzbetätigung für die Auswahl verschiedener Fahrstilvarianten vorgesehen ist. Die zweite Zusatzbetätigung kann im Turnus zwischen Komfort, Sport und Manuell umgeschaltet werden. Eine Fahrprogrammwahl erfolgt durch die Betätigung der zweiten Zusatzbetätigung, eine zumindest teilweise simultan mit der Betätigung des Gangwahlschalters oder sequentielle Betätigung des Gangwahlschalters nach einer Betätigung der zweiten Zusatzbetätigung ist nicht beschrieben.

Anhand der DE 10 2007 036 086 A1 eine Schalteinheit für ein elektronisch geschaltetes Getriebe bekannt geworden, bei der ein separat vom Wählhebel des Getriebes angeordneter Schalter vorgesehen ist, dessen Betätigung dazu führt, dass von der elektronischen Getriebesteuerung ein Sportfahrprogramm ausgewählt wird, sofern der monostabilen Grundstellung des Wählhebels ein D Vorwärtsfahrprogramm zugeordnet ist.

Aus einer auf die Anmelderin zurückgehenden Anordnung ist ebenfalls eine Betätigungsvorrichtung für ein Getriebe eines Kraftfahrzeugs bekannt geworden, mit einem in einer Schaltgasse bewegbaren Gangwahlschalter zum Anwählen eines Vorwärtsfahrprogramms, einer Rückwärtsfahrstufe und eines Sportfahrprogramms des Getriebes, wobei der Gangwahlschalter zur Einnahme einer monostabilen Ruheposition in der Schaltgasse ausgebildet ist. Auch hier ist der Gangwahlschalter zudem zum Anwählen des Vorwärtsprogramms in eine erste Einrastposition und zum Anwählen des Sportfahrprogramms in eine zweite Einrastposition bringbar, wenn eine Neutralstufe eingelegt ist, und sich der Gangwahlschalter sich in der monostabilen Ruheposition befindet. Zu den genannten Fahrprogrammen kommt zusätzlich eine Parksperrschaltung hinzu, die mit einem eigens dafür vorgesehenen, benachbart zum Gangwahlschalter angeordneten Betätigungsknopf anwählbar ist.

Obwohl sich die bekannte Betätigungsvorrichtung zum Anwählen von Fahrprogrammen eines Getriebes in der Praxis bereits bestens bewährt hat, bestehen noch Verbesserungsmöglichkeiten. Um das Sportfahrprogramm aus der Neutralstufe anzuwählen muss der Fahrer den Gangwahlschalter zuerst in eine erste Einrastposition bewegen, und nach Erreichen der ersten Einrastposition in dieselbe Richtung weiterbewegen, bis der Gangwahlschalter eine zweite Einrastposition erreicht. Dies dauert relativ lange, und läuft der Intuition des Fahrers zuwider, da der Fahrer den Gangwahlschalter zum Anwählen des Sportfahrprogramms in dieselbe Richtung zweifach bewegen muss, da der Gangwahlschalter nach Erreichen der Einrastposition des Vorwärtsprogramms in dieselbe Richtung weiterbewegt werden muss.

Es ist daher Aufgabe der vorliegenden Erfindung, eine Betätigungsvorrichtung für ein Getriebe eines Kraftfahrzeugs zu schaffen, mit der das direkte Anwählen der Rückwärtsfahrstufe, des Vorwärtsfahrprogramms und wenigstens eines weiteren Fahrprogramms aus der Neutralstufe heraus für den Fahrer komfortabler und seiner Intuition zugänglicher ist.

Die Erfindung löst diese Aufgabe mit den Merkmalen nach dem Anspruch 1. Vorteilhafte Ausgestaltungen sind in weiteren Ansprüchen beschrieben.

Die Erfindung schafft eine Betätigungsvorrichtung für ein Getriebe eines Kraftfahrzeugs, mit einem in einer Schaltgasse bewegbaren Gangwahlschalter zum Anwählen wenigstens eines Vorwärtsfahrprogramms und einer Rückwärtsfahrstufe des Getriebes, wobei der Gangwahlschalter zur Einnahme einer monostabilen Ruheposition in der Schaltgasse ausgebildet ist und eine Betätigungseinrichtung aufweist, wobei die Betätigungsvorrichtung zum Anwählen wenigstens eines weiteren Fahrprogramms durch eine zumindest teilweise simultane Betätigung des Gangwahlschalters und der Betätigungseinrichtung ausgebildet ist und die Betätigungseinrichtung einen federbelasteten Schalter aufweist, der durch eine Betätigung des Gangwahlschalters aktivierbar ist.

Unter die zumindest teilweise simultane Betätigung des Gangwahlschalters und der Betätigungseinrichtung fallen sowohl vollständig simultane Betätigungen, das heißt Betätigungen, bei denen der Gangwahlschalter und die Betätigungseinrichtung während derselben Zeitdauer betätigt werden, als auch nur teilweise simultane Betätigungen, bei denen der Gangwahlschalter und die Betätigungseinrichtung nicht während derselben Zeitdauer betätigt werden. Im letzteren Fall beginnt der Fahrer beispielsweise eine Betätigung des Gangwahlschalters und der Betätigungseinrichtung, und beendet dann die Betätigung der Betätigungseinrichtung, während er die Betätigung des Gangwahlschalters weiterhin fortsetzt.

Mittels der erfindungsgemäßen Betätigungsvorrichtung kann ein Fahrer neben dem Vorwärtsfahrprogramm und der Rückwärtsfahrstufe auch das weitere Fahrprogramm aus der monostabilen Ruheposition des Gangwahlschalters heraus durch simultane Betätigung des Gangwahlschalters und der Betätigungseinrichtung direkt anwählen. Anders als bei den oben genannten bekannten Vorrichtungen muss er den Gangwahlschalter nicht in unterschiedliche Einrastpositionen bringen, um alle Fahrprogramme zu erreichen. Damit ist das Anwählen von Fahrprogrammen komfortabler und der Intuition zugänglicher als bei den bekannten Vorrichtungen und das direkte Erreichen des weiteren Fahrprogrammes wird erleichtert und läuft schneller ab. Dadurch wird auch die Bediensicherheit erhöht und Fehlbedienungen werden reduziert.

Das Anwählen der Fahrprogramme erfolgt zudem innerhalb von nur einer einzigen Schaltgasse. Dadurch können, wenn eine erfindungsgemäße Betätigungsvorrichtung in ein Fahrzeug eingebaut wird, Kosten und Bauraum eingespart werden.

Unter dem Vorwärtsfahrprogramm ist dabei ein Fahrprogramm zu verstehen, bei welchem automatisch zwischen verschiedenen Vorwärtsfahrstufen geschaltet wird, beispielsweise in Abhängigkeit der Motordrehzahl und/oder anderen Fahrbetriebsparametem, wie es bei bekannten Automatikgetrieben üblich ist.

In der Regel kommt zu den genannten Fahrprogrammen auch eine Neutralstufe hinzu. Diese wird vorzugsweise jeweils für kurze Zeit vorübergehend angewählt, wenn der Fahrer bei angewählter Rückwärtsfahrstufe zum Vorwärtsfahrprogramm wechselt, oder wenn der Fahrer bei angewähltem Vorwärtsfahrprogramm in die Rückwärtsfahrstufe wechselt. Damit genügt die erfindungsgemäße Betätigungsvorrichtung auch Vorgaben, denen zufolge ein direkter Wechsel aus der Rückwärtsfahrstufe ins Vorwärtsfahrprogramm oder aus dem Vorwärtsfahrprogramm in die Rückwärtsstufe unzulässig ist.

Gemäß einer bevorzugten Ausführungsform ist die Betätigungseinrichtung zur Betätigung durch Ausübung einer Druckkraft oder einer Zugkraft auf den Gangwahlschalter ausgebildet.

Die Erfindung umfasst dabei sowohl Ausführungsformen, bei denen die Betätigungseinrichtung beide Möglichkeiten zur Betätigung bietet, also das Ausüben einer Druckkraft oder einer Zugkraft, und auch Ausführungsformen, bei denen die Betätigungseinrichtung zur Betätigung durch eine der beiden genannten Kräfte ausgebildet ist.

Der Fahrer wählt dann beispielsweise das Vorwärtsfahrprogramm an, indem er den Gangwahlschalter betätigt, ohne zusätzlich eine Druckkraft oder Zugkraft auszuüben, und er wählt das weitere Fahrprogramm an, indem er den Gangwahlschalter betätigt, und gleichzeitig eine Druckkraft, beziehungsweise eine Zugkraft auf den Gangwahlschalter ausübt.

Nach der Erfindung weist die Betätigungseinrichtung außerdem einen federbelasteten Schalter auf, der durch Betätigung des Gangwahlschalters aktivierbar ist.

Die den federbelastenden Schalter aktivierende Betätigung ist dabei vorzugsweise eine andere Betätigung als das Verschwenken des Gangwahlschalters in der Schaltgasse. Die Betätigung zum Aktivieren des federbelastenden Schalters ist beispielsweise ein Ausüben von Druckkraft auf den Gangwahlschalter, so dass dieser entgegen der Federkraft nach unten verschoben wird, und der federbelastete Schalter geschlossen wird.

Gemäß einer bevorzugten Ausführungsform ist der Gangwahlschalter durch Verschwenkung in eine Richtung in eine erste Einrastposition und durch weitere Verschwenkung in dieselbe Richtung in eine zweite Einrastposition bringbar.

Die Einrastpositionen sind dabei, anders als die monostabile Ruheposition, nur semistabil, das heißt, dass der Gangwahlschalter aus den Einrastpositionen in die monostabile Ruheposition zurückspringt, sobald der Fahrer den Gangwahlschalter nicht mehr betätigt.

Die Schaltgasse verläuft in der Regel in Fahrzeuglängsrichtung. Vorzugsweise ist der Gangwahlschalter dann durch Verschwenkung nach vorne in zwei Einrastpositionen bringbar, und durch Verschwenkung nach hinten ebenfalls in zwei Einrastpositionen bringbar. Die Anzahl von zwei Einrastpositionen ist jedoch keine Beschränkung, die Erfindung umfasst beispielsweise auch Ausführungsformen, bei denen der Gangwahlschalter in der einen Richtung beispielsweise in eine Einrastposition, und in der anderen Richtung ebenfalls in eine oder in mehr Einrastpositionen bringbar ist.

Nach einer vorteilhaften Weiterbildung der Erfindung weist die Betätigungsvorrichtung außerdem eine am Gangwahlschalter oder benachbart dazu angeordnete Einrichtung zum Aktivieren und/oder Deaktivieren einer Parksperre auf. Die Einrichtung ist beispielsweise ein am Gangwahlschalter angeordneter Betätigungsknopf.

Gemäß einer weiteren Ausführungsform der erfindungsgemäßen Betätigungsvorrichtung ist der Gangwahlschalter bei aktivierter Parksperre zum Anwählen des Vorwärtsfahrprogramms durch Verschwenkung des Gangwahlschalters aus der Ruheposition in eine erste Einrastposition und zum Anwählen des weiteren Fahrprogramms durch eine Betätigung der Betätigungseinrichtung und eine Verschwenkung des Gangwahlschalters in die erste Einrastposition ausgebildet.

Wenn die Parksperre aktiviert ist, ist das Getriebe verriegelt. Es entspricht der Intuition des Fahrers, dass er den Gangwahlschalter um eine Stufe verschwenken muss, also aus der Ruheposition in eine erste Einrastposition, um das Vorwärtsfahrprogramm anzuwählen. Bei dem weiteren Fahrprogramm handelt es sich beispielsweise um ein Sportfahrprogramm. Auch dieses Fahrprogramm ist bei dieser Ausführungsform durch Verschwenkung des Gangwahlschalters um eine Stufe, also in dieselbe Einrastposition, bei gleichzeitiger Betätigung der Betätigungseinrichtung, anwählbar.

Das Anwählen des Vorwärtsfahrprogramms ist vorzugsweise durch Verschwenkung des Gangwahlschalters nach hinten anwählbar. Das weitere Fahrprogramm also beispielsweise das Sportfahrprogramm, ist dann ebenfalls durch Verschwenkung des Gangwahlschalters nach hinten, bei gleichzeitiger Betätigung der Betätigungseinrichtung, anwählbar.

Die erfindungsgemäße Betätigungsvorrichtung ist außerdem vorzugsweise zum Anwählen der Rückwärtsfahrstufe bei aktivierter Parksperre durch Verschwenkung des Gangwahlschalters aus der Ruheposition in eine dritte Einrastposition anwählbar.

Dabei bezeichnet die dritte Einrastposition eine Einrastposition, die durch eine zum Erreichen der ersten Einrastposition entgegengesetzte Verschwenkung des Gangwahlschalters erreichbar ist. Wenn die erste Einrastposition beispielsweise durch eine Verschwenkung nach hinten erreicht wird, wird die dritte Einrastposition durch eine Verschwenkung nach vorne erreicht. Die Rückwärtsfahrstufe ist vorzugsweise durch eine Verschwenkung des Gangwahlschalters nach vorne anwählbar.

Gemäß einer bevorzugten Ausführungsform ist der Gangwahlschalter zudem bei angewählter Rückwärtsfahrstufe zum Anwählen einer Neutralstufe durch Verschwenkung des Gangwahlschalters aus der Ruheposition in eine erste Einrastposition, und zum Anwählen des Vorwärtsfahrprogramms durch Verschwenkung in eine zweite Einrastposition ausgebildet.

Es entspricht der Intuition des Fahrers, dass er aus der Rückwärtsfahrstufe zuerst in die Neutralstufe gelangt, und durch eine weitere Betätigung des Gangwahlschalters in das Vorwärtsfahrprogramm. Es lässt sich somit zugleich realisieren, dass die erfindungsgemäße Betätigungsvorrichtung eine monostabile Ruheposition aufweist, und zugleich immer eine der Intuition entsprechende Betätigung zum Anwählen von Fahrprogrammen möglich ist. Dies bedeutet beispielsweise, dass bei aktivierter Parksperre, beziehungsweise bei angewählter Neutralstufe eine Betätigung in die erste Einrastposition zum Anwählen des Vorwärtsfahrprogramms genügt, während bei aktivierter Rückwärtsfahrstufe, eine Betätigung des Gangwahlschalters über die erste Einrastposition hinaus in die zweite Einrastposition erforderlich ist.

Der Gangwahlschalter ist vorzugsweise ebenfalls bei angewähltem Vorwärtsfahrprogramm zum Anwählen einer Neutralstufe durch Verschwenkung des Gangwahlschalters aus der Ruheposition in eine dritte Einrastposition, und zum Anwählen der Rückwärtsfahrstufe durch Verschwenkung in eine vierte Einrastposition ausgebildet. Auf diese Weise entspricht auch das Verschwenken des Gangwahlschalters zum Anwählen der Neutralstufe und der Rückwärtsfahrstufe bei angewähltem Vorwärtsfahrprogramm der Intuition des Fahrers.

Gemäß einer weiteren Ausführungsform der erfindungsgemäßen Betätigungsvorrichtung ist der Gangwahlschalter bei angewähltem Vorwärtsfahrprogramm zum Anwählen des weiteren Fahrprogramms durch Verschwenkung des Gangwahlschalters in dieselbe Richtung, in welche der Gangwahlschalter zum Anwählen des Vorwärtsfahrprogramms verschwenkt wird, ausgebildet, und zum Anwählen des Vorwärtsfahrprogramms durch Verschwenkung in dieselbe Richtung, wenn das weitere Fahrprogramm angewählt ist.

Gemäß einer weiteren Ausführungsform der erfindungsgemäßen Betätigungsvorrichtung weist der Gangwahlschalter am unteren Ende einen mit einer Feder vorgespannten Rastierpin auf, der in der monostabilen Ruheposition des Gangwahlschalters in einer Ruheraststufe und mittels Verschwenkung des Gangwahlschalters in wenigstens einer weiteren Raststufe einrastbar ist.

Durch eine Betätigung des Gangwahlschalters kann dieser, entgegen der Federkraft, verschwenkt werden, so dass auch das untere Ende aus der Ruheraststufe verschwenkt wird. Am unteren Ende des Gangwahlschalters ist der zum Einrasten in Raststufen ausgebildete Rastierpin angeordnet. Die weitere Raststufe ist anders als die monostabile Ruheraststufe in dem Sinne instabil, dass der Gangwahlschalter in die Ruheposition zurückspringt, sobald der Gangwahlschalter nicht betätigt wird, und damit auch das untere Ende wieder in die Ruheraststufe zurückspringt. Die weitere Raststufe entspricht einer Einrastposition des Gangwahlschalters und ist für den Fahrer spürbar, so dass der Fahrer spürt, wann er durch Verschwenkung des Gangwahlschalters die entsprechende Einrastposition erreicht hat.

Die weitere Raststufe oder mehrere weitere Raststufen sind beispielsweise als Vertiefungen in einer Oberfläche realisiert, über welche das untere Ende des Gangwahlschalters bei einer Verschwenkung bewegt wird. Aufgrund der Federkraft rastet das untere Ende in die Raststufen ein, wenn es über eine der Vertiefungen bewegt wird.

Die Erfindung wird nachstehend anhand der beigefügten Zeichnungen beispielhaft näher erläutert. Es zeigt:
- Fig. 1: einen Längsschnitt durch eine schematisch dargestellte erfindungsgemäße Betätigungsvorrichtung; und
- Fig.2: eine schematische Darstellung eines Schaltschemas der erfindungsgemäßen Betätigungsvorrichtung

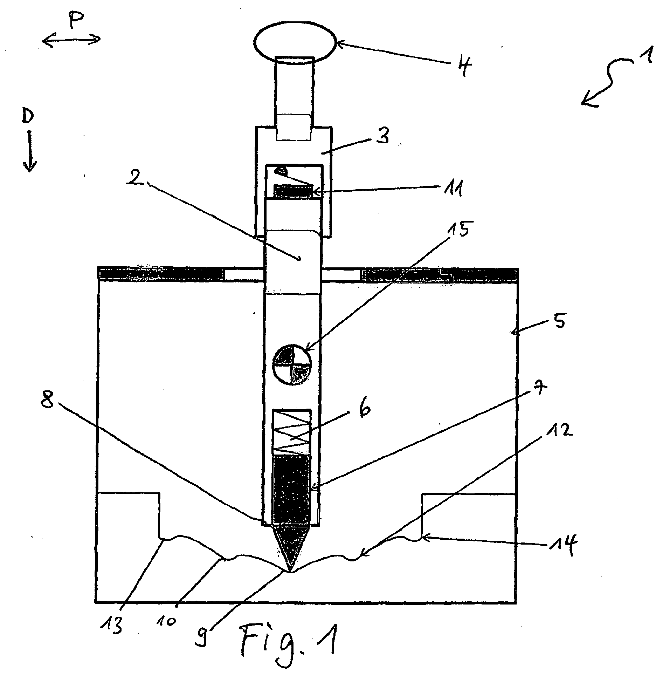

Fig. 1. zeigt einen Längsschnitt durch eine erfindungsgemäße Betätigungsvorrichtung 1. Diese dient dazu, in einem nicht näher dargestellten Fahrzeug Fahrprogramme eines ebenfalls nicht näher dargestellten Getriebes anzuwählen. Die Betätigungsvorrichtung 1 weist einen Gangwahlschalter 2 mit einem Schaltknauf 4 auf, der in einer Schaltgasse in Fahrzeuglängsrichtung, angedeutet mit dem Doppelpfeil P, zum Anwählen der Fahrprogramme bewegbar ist. Der Gangwahlschalter 2 ist außerdem zur Einnahme einer monostabilen Ruheposition ausgebildet, in welcher der Gangwahlschalter, wie in der Fig. 1 dargestellt, eine weitgehend vertikale Stellung einnimmt.

Die Betätigungsvorrichtung 1 weist außerdem eine Betätigungseinrichtung 3 auf. Mit der Betätigungsvorrichtung 1 sind durch Betätigung eine Rückwärtsfahrstufe, ein Vorwärtsfahrprogramm und eine Neutralstufe anwählbar. Durch gleichzeitige Betätigung des Gangwahlschalters 2 und der Betätigungseinrichtung 3 ist zudem ein weiteres Fahrprogramm, im dargestellten Fall ein Sportfahrprogramm, anwählbar.

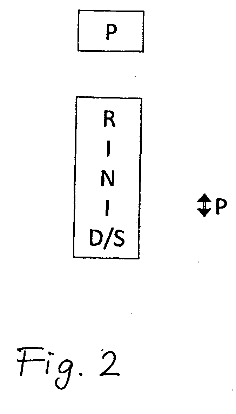

Wenn die Neutralstufe eingelegt ist, kann der Fahrer das Vorwärtsfahrprogramm anwählen, indem er den Gangwahlschalter 2 nach hinten verschwenkt. Damit kann das in Fig. 2 dargestellte Vorwärtsfahrprogramm D angewählt werden. Durch eine Verschwenkung des oberen Endes des Gangwahlschalters 2 in der Figurenebene nach rechts, wird der Gangwahlschalter 2 um einen Drehpunkt 15 verschwenkt, und das innerhalb eines Gehäuses 5 liegende untere Ende 8 des Gangwahlschalters 2 wird in die entgegengesetzte Richtung, also in der Figurenebene nach links, verschoben.

Das untere Ende 8 weist einen mit einer Feder 6 vorgespannten Rastierpin 7 auf, welcher, wenn der Gangwahlschalter 2 die monostabile Ruheposition einnimmt, in einer Ruheraststufe 9 einrastet. Durch Verschwenken des Gangwahlschalters 2 zum Anwählen des Vorwärtsfahrprogramms aus der Neutralstufe heraus, gelangt der Rastierpin 7 bis zu einer ersten Einrastposition in der er in einer ersten Raststufe 10 einrastet. Sobald der Gangwahlschalter 2 die erste Raststufe 10 erreicht hat, ist das Vorwärtsfahrprogramm angewählt. Der Fahrer kann den Gangwahlschalter 2 loslassen, woraufhin dieser aus der ersten Raststufe 10 in die monostabile Ruheposition mit der Ruheraststufe 9 zurückschnappt.

Der Fahrer kann aus der Neutralstufe auch direkt ein Sportfahrprogramm anwählen, das in Fig. 2 mit dem Buchstaben S bezeichnet ist. Hierzu verschwenkt er ebenfalls den Gangwahlschalter 2 bis in die erste Einrastposition und betätigt gleichzeitig die Betätigungseinrichtung 3. Diese weist einen elektrischen Schalter 11 auf, der aktiviert wird, wenn der Fahrer eine Druckkraft auf den Gangwahlschalter 2 in Richtung des Pfeils D in der Zeichnungsebene nach unten ausübt. Drückt er den Gangwahlschalter 2 nach unten, und verschwenkt er ihn in die erste Einrastposition ist das weitere Fahrprogramm angewählt. Nimmt der Fahrer die in Richtung des Pfeils D wirkende Druckkraft wieder weg, kehrt der Schaltknauf 4, unterstützt durch eine nicht näher dargestellte Federeinrichtung, in seine Ausgangsposition zurück. Befindet sich das Getriebe bereits in einem Vorwärtsfahrprogramm D, kann der Fahrer durch Verschwenken des Gangwahlschalters 2 aus der monostabilen Ruheposition nach hinten das weitere Fahrprogramm S anwählen und durch nochmaliges Verschwenken des Gangwahlschalters 2 nach hinten wieder in das Vorwärtsfahrprogramm D wechseln.

Zum Anwählen der Rückwärtsfahrtstufe R aus der Neutralstufe N nach Fig. 2 heraus, muss der Fahrer den Gangwahlschalter 2 aus der monostabilen Ruheposition nach vorne verschwenken, bis in eine dritte Einrastposition. Die dritte Einrastposition ist erreicht, wenn der Rastierpin 7 in eine dritte Raststufe 12 einrastet.

Wenn der Fahrer hingegen nicht aus der Neutralstufe heraus, sondern bei bereits angewählter Rückwärtsfahrstufe das Vorwärtsfahrprogramm anwählen will, muss er den Gangwahlschalter 2 nicht nur bis zur ersten Einrastposition, sondern bis zu einer zweiten Einrastposition verschwenken. Sobald der Gangwahlschalter 2 nach hinten verschwenkt ist, und der Rastierpin 7 in die erste Raststufe 10 einrastet, ist die Neutralstufe angewählt.

Nun muss der Fahrer den Gangwahlschalter 2 noch weiter nach hinten bis in eine zweite Einrastposition verschwenken, bis der Rastierpin 7 in einer zweiten Raststufe 13 einrastet. Sobald die zweite Einrastposition erreicht ist, ist das Vorwärtsfahrprogramm angewählt. Der Fahrer kann dann den Gangwahlschalter 2 wieder loslassen, worauf dieser in die monostabile Ruheposition zurückspringt.

Um die Rückwärtsfahrstufe aus dem Vorwärtsfahrprogramm anzuwählen, muss der Gangwahlschalter 2 bei der dargestellten Ausführungsform auch weiter nach vorne verschwenkt werden, als aus der Neutralstufe heraus. Wenn der Gangwahlschalter 2 die dritte Einrastposition erreicht, und der Rastierpin 7 in der dritten Raststufe 12 einrastet, ist die Neutralstufe angewählt. Wird der Gangwahlschalter 2 weiter nach vorne, bis in eine vierte Einrastposition verschwenkt, rastet der Rastierpin 7 in einer vierten Raststufe 14 ein. Dann ist die Rückwärtsfahrstufe angewählt.

Auf diese Weise ist immer, unabhängig vom derzeit angewählten Fahrprogramm eine für den Fahrer intuitiv einleuchtende Verschwenkbewegung des Gangwahlschalters 2 zum Anwählen von Fahrprogrammen erforderlich.

Aus der Neutralstufe muss der Fahrer, um das Vorwärtsfahrprogramm oder die Rückwärtsfahrstufe anzuwählen, den Gangwahlschalter 2 stets um nur eine Rastposition verschwenken. Um hingegen aus dem Vorwärtsfahrprogramm in die Rückwärtsfahrstufe, oder aus der Rückwärtsfahrstufe ins Vorwärtsfahrprogramm zu wechseln, muss der Fahrer den Gangwahlschalter 2 um zwei Rastpositionen verschwenken, da er vorerst, nach einer Verschwenkung um eine Rastposition, in die Neutralstufe gelangt.

Hinsichtlich vorstehend im Einzelnen nicht näher erläuterter Merkmale der Erfindung wird im Übrigen ausdrücklich auf die Patentansprüche und die Zeichnungen verwiesen.

### Bezugszeichenliste

- 1: Betätigungsvorrichtung
- 2: Gangwahlschalter
- 3: Betätigungseinrichtung
- 4: Schaltknauf
- 5: Gehäuse
- 6: Feder
- 7: Rastierpin
- 8: unteres Ende des Gangwahlschalters
- 9: Ruheraststufe
- 10: erste Raststufe
- 11: elektrischer Schalter
- 12: dritte Raststufe
- 13: zweite Raststufe
- 14: vierte Raststufe
- 15: Drehpunkt

- P: Doppelpfeil
- D: Pfeil Druckkraft

## Patentansprüche

1. Betätigungsvorrichtung für ein Getriebe eines Kraftfahrzeugs, mit einem in einer Schaltgasse bewegbaren Gangwahlschalter (2) zum Anwählen wenigstens eines Vorwärtsfahrprogramms und einer Rückwärtsfahrstufe des Getriebes, wobei der Gangwahlschalter (2) zur Einnahme einer monostabilen Ruheposition in der Schaltgasse ausgebildet ist und eine Betätigungseinrichtung (3) aufweist, **dadurch gekennzeichnet, dass** die Betätigungsvorrichtung (1) zum Anwählen wenigstens eines weiteren Fahrprogramms durch eine zumindest teilweise simultane Betätigung des Gangwahlschalters (2) und der Betätigungseinrichtung (3) ausgebildet ist und die Betätigungseinrichtung (3) einen federbelasteten Schalter (11) aufweist, der durch eine Betätigung des Gangwahlschalters (2) aktivierbar ist.

2. Betätigungsvorrichtung nach Anspruch 1, **dadurch gekennzeichnet, dass** die Betätigungseinrichtung (3) zur Betätigung durch Ausübung einer Druckkraft oder Zugkraft auf den Gangwahlschalter (2) ausgebildet ist.

3. Betätigungsvorrichtung nach einem der vorstehenden Ansprüche, **dadurch gekennzeichnet, dass** der Gangwahlschalter (2) durch Verschwenkung in eine Richtung in eine erste semistabile Einrastposition und durch weitere Verschwenkung in dieselbe Richtung in eine zweite semistabile Einrastposition bringbar ist.

4. Betätigungsvorrichtung nach einem der vorstehenden Ansprüche, **gekennzeichnet durch** eine am Gangwahlschalter (2) oder benachbart dazu angeordnete Einrichtung zum Aktivieren und/oder Deaktivieren einer Parksperre.

5. Betätigungsvorrichtung nach Anspruch 3 und 4, **dadurch gekennzeichnet, dass** der Gangwahlschalter (2) bei aktivierter Parksperre zum Anwählen des Vorwärtsfahrprogramms durch Verschwenkung des Gangwahlschalters (2) aus der Ruheposition in die erste semistabile Einrastposition, und zum Anwählen des weiteren Fahrprogramms durch eine Betätigung der Betätigungseinrichtung (3) und eine Verschwenkung des Gangwahlschalters (2) in die erste semistabile Einrastposition ausgebildet ist.

6. Betätigungsvorrichtung nach Anspruch 3 und 4, oder 5, **dadurch gekennzeichnet, dass** der Gangwahlschalter (2) bei aktivierter Parksperre zum Anwählen der Rückwärtsfahrstufe durch Verschwenkung des Gangwahlschalters (2) aus der Ruheposition in eine dritte semistabile Einrastposition ausgebildet ist.

7. Betätigungsvorrichtung nach Anspruch 3, oder 3 und 4, oder 5, oder 6, **dadurch gekennzeichnet, dass** der Gangwahlschalter (2) bei angewählter Rückwärtsfahrstufe zum Anwählen einer Neutralstufe durch Verschwenkung des Gangwahlschalters (2) aus der Ruheposition in die erste semistabile Einrastposition, und zum Anwählen des Vorwärtsfahrprogramms durch Verschwenkung in die zweite semistabile Einrastposition ausgebildet ist.

8. Betätigungsvorrichtung nach Anspruch 6, oder 6 und 7, **dadurch gekennzeichnet, dass** der Gangwahlschalter (2) bei angewähltem Vorwärtsfahrprogramm zum Anwählen einer Neutralstufe durch Verschwenkung des Gangwahlschalters (2) aus der Ruheposition in die dritte semistabile Einrastposition, und zum Anwählen der Rückwärtsfahrstufe durch Verschwenkung in eine vierte semistabile Einrastposition ausgebildet ist.

9. Betätigungsvorrichtung nach einem der vorstehenden Ansprüche, **dadurch gekennzeichnet, dass** der Gangwahlschalter (2) am unteren Ende (8) einen mit einer Feder (6) vorgespannten Rastierpin (7) aufweist, der in der monostabilen Ruheposition des Gangwahlschalters (2) in einer Ruheraststufe (9) und mittels Verschwenkung des Gangwahlschalters (2) in wenigstens einer weiteren instabilen Raststufe (10, 12, 13, 14) einrastbar ist.

## Claims

1. An actuating device for a transmission of a motor vehicle, comprising a gear shift selector (2), movable in a shift gate, for selecting at least one forward drive program and a reverse gear of the transmission, wherein the gear shift selector (2) is configured to occupy a monostable rest position in the shift gate and it has an actuating means (3), **characterised in that** the actuating device (1) is configured to select at least one further drive program by an at least partly simultaneous actuation of the gear shift selector (2) and of the actuating means (3), and the actuating means (3) has a spring-loaded switch (11) which can be activated by actuating the gear shift selector (2).

2. An actuating device according to claim 1, **characterised in that** the actuating means (3) is configured for actuation by exerting a compressive force or a tensile force on the gear shift selector (2).

3. An actuating device according to either of the preceding claims, **characterised in that** the gear shift selector (2) can be brought into a first semi-stable engaged position by swivelling in one direction and can be brought into a second semi-stable engaged position by swivelling further in the same direction.

4. An actuating device according to any one of the preceding claims, **characterised by** a means, arranged on the gear shift selector (2) or adjacently thereto, for activating and/or deactivating a parking lock.

5. An actuating device according to claim 3 and claim 4, **characterised in that** when the parking lock is activated, the gear shift selector (2) is configured to select the forward drive program by a swivelling movement of the gear shift selector (2) out of the rest position into the first semi-stable engaged position, and is configured to select the further drive program by an actuation of the actuating means (3) and by a swivelling movement of the gear shift selector (2) into the first semi-stable engaged position.

6. An actuating device according to claim 3 and claim 4, or claim 5, **characterised in that** when the parking lock is activated, the gear shift selector (2) is configured to select the reverse gear by a swivelling movement of the gear shift selector (2) out of the rest position into a third semi-stable engaged position.

7. An actuating device according to claim 3, or claim 3 and claim 4, or claim 5, or claim 6, **characterised in that** when the reverse gear has been selected, the gear shift selector (2) is configured to select a neutral position by a swivelling movement of the gear shift selector (2) out of the rest position into the first semi-stable engaged position, and is configured to select the forward drive program by a swivelling movement into the second semi-stable engaged position.

8. An actuating device according to claim 6, or claim 6 and claim 7, **characterised in that** when the forward drive program has been selected, the gear shift selector (2) is configured to select a neutral position by a swivelling movement of the gear shift selector (2) out of the rest position into the third semi-stable engaged position, and is configured to select the reverse gear by a swivelling movement into a fourth semi-stable engaged position.

9. An actuating device according to any one of the preceding claims, **characterised in that** at its lower end (8), the gear shift selector (2) has a detent pin (7) which is prestressed by a spring (6) and which, in the monostable rest position of the gear shift selector (2), can be engaged in a rest detent position (9) and can be engaged in at least one further unstable detent position (10, 12, 13, 14) by swivelling the gear shift selector (2).

## Revendications

1. Dispositif d'actionnement d'une boîte de vitesse de véhicule comprenant un sélecteur de vitesse (2) mobile dans un chemin de commutation pour permettre de sélectionner au moins un programme de déplacement en marche avant et un étage de déplacement en marche arrière de la boîte de vitesse, le sélecteur de vitesse (2) étant réalisé pour occuper une position de repos monostable dans le chemin de commutation et comprenant un organe d'actionnement (3),
**caractérisé en ce que**
le dispositif d'actionnement (1) est réalisé pour pouvoir sélectionner au moins un autre programme de déplacement par actionnement au moins partiellement simultané du sélecteur de vitesse (2) et de l'organe d'actionnement (3), et l'organe d'actionnement (3) comportant un commutateur sollicité élastiquement (11) qui peut être activé par l'actionnement du sélecteur de vitesse (2).

2. Dispositif d'actionnement conforme à la revendication 1,
**caractérisé en ce que**
l'organe d'actionnement (3) est conçu pour être actionné en exerçant une force de pression ou une force de traction sur le sélecteur de vitesse (2).

3. Dispositif d'actionnement conforme à l'une des revendications précédentes,
**caractérisé en ce que**
le sélecteur de vitesse (2) peut être transféré par pivotement dans une direction dans une première position encliquetée semi-stable et par poursuite du pivotement dans la même direction dans une seconde position encliquetée semi-stable.

4. Dispositif d'actionnement conforme à l'une des revendications précédentes,
**caractérisé par**
un organe permettant d'activer et/ou de désactiver un frein de stationnement monté sur le sélecteur de vitesse (2) ou à proximité de celui-ci.

5. Dispositif d'actionnement conforme aux revendications 3 et 4,
**caractérisé en ce que**
lorsque le frein de stationnement est activé le sélecteur de vitesse (2) est réalisé, pour pouvoir sélectionner le programme de déplacement en marche avant par pivotement du sélecteur de vitesse (2) de la position de repos dans la première position encliquetée semi-stable, et sélectionner l'autre programme de déplacement par actionnement de l'organe d'actionnement (3) et pivotement du sélecteur de vitesse (2) dans la première position encliquetée semi-stable.

6. Dispositif d'actionnement conforme aux revendications 3 et 4 ou 5,
**caractérisé en ce que**
lorsque le frein de stationnement est activé, le sélecteur de vitesse (2) est réalisé pour pouvoir sélectionner l'étage de déplacement en marche arrière par pivotement du sélecteur de vitesse (2) de la position de repos dans une troisième position encliquetée semi-stable.

7. Dispositif d'actionnement conforme aux revendications 3, ou 3 et 4 ou 5 ou 6,
**caractérisé en ce que**
lorsque l'étage de déplacement en marche arrière est sélectionné, le sélecteur de vitesse (2) est réalisé pour pouvoir sélectionner un étage neutre par pivotement du sélecteur de vitesse (2) de la position de repos dans la première position encliquetée semi-stable, et sélectionner le programme de déplacement en marche avant par pivotement dans la seconde position encliquetée semi-stable.

8. Dispositif d'actionnement conforme aux revendications 6, ou 6 et 7,
**caractérisé en ce que**
lorsque le programme de déplacement en marche avant est sélectionné, le sélecteur de vitesse (2) est réalisé pour pouvoir sélectionner un étage neutre par pivotement du sélecteur de vitesse (2) de la position de repos dans la troisième position encliquetée semi-stable et sélectionner l'étage de déplacement en marche arrière par pivotement dans une quatrième position encliquetée semi-stable.

9. Dispositif d'actionnement conforme à l'une des revendications précédentes,
**caractérisé en ce que**
le sélecteur de vitesse (2) comporte, à son extrémité inférieure (8), une broche d'encliquetage (7) précontrainte par un ressort (6) pouvant être encliquetée dans la position de repos monostable du sélecteur de vitesse (2) dans un étage encliqueté de repos (9) et par pivotement du sélecteur de vitesse (2) dans au moins un autre étage encliqueté instable (10, 12, 13, 14).
